# EUROPEAN PATENT APPLICATION

(11) **EP 4 456 164 A1**
(43) Date of publication of application: **30.10.2024**
(21) Application number: 22910588.7
(22) Date of filing: 28.10.2022
(51) Int. Cl.: H01M 4/13, H01M 4/505, H01M 4/525, H01M 4/64

(54) **NONAQUEOUS ELECTROLYTE SECONDARY BATTERY**

(30) Priority: 22.12.2021 JP 2021208759
(71) Applicant: Panasonic Intellectual Property Management Co., Ltd., Osaka-shi, Osaka 540-6207 (JP)
(72) Inventor: MATSUI, Tooru, Kadoma-shi, Osaka 571-0057 (JP); OKI, Yukihiro, Kadoma-shi, Osaka 571-0057 (JP); KAWADA, Hiroshi, Kadoma-shi, Osaka 571-0057 (JP); HIBINO, Mitsuhiro, Kadoma-shi, Osaka 571-0057 (JP); NAKURA, Kensuke, Kadoma-shi, Osaka 571-0057 (JP)
(74) Representative: Novagraaf International SA
(86) International application number: PCT/JP2022/040311
(87) International publication number: WO 2023/119867

(57) **Abstract**

The present invention provides a nonaqueous electrolyte secondary battery which comprises a positive electrode (11), a negative electrode (12) and a nonaqueous electrolyte, and which is characterized in that: the positive electrode (11) comprises a positive electrode collector (30) and a positive electrode mixture layer (32) that is arranged on the positive electrode collector (30); the positive electrode mixture layer (32) comprises secondary particles, each of which is composed of aggregated primary particles of a positive electrode active material, and an assembly of a conductive material and the primary particles of the positive electrode active material; and the assembly is present in the gaps among the secondary particles.

## Description

### TECHNICAL FIELD

The present invention relates to a technique of a non-aqueous electrolyte secondary battery.

### BACKGROUND

In recent years, as secondary batteries with a high output and a high energy density, non-aqueous electrolyte secondary batteries that include a positive electrode, a negative electrode, and a non-aqueous electrolyte and perform charge and discharge by allowing lithium ions to travel between the positive electrode and the negative electrode are widely used.

For example, Patent Literature 1 discloses a positive electrode containing two or more active materials, in which particles (primary particles) of an active material (small particle active material) having a relatively smallest particle size among the two or more active materials are aggregated and secondarily formed into particles (secondary particles) so that the particle size with another active material to be mixed becomes uniform.

In addition, for example, Patent Literature 2 discloses a positive electrode active material in which an average particle diameter of lithium composite oxide particles is within a range of greater than or equal to 0.1 µm and less than or equal to 50 µm and there are two or more peaks in a particle size distribution of the lithium composite oxide particles.

### CITATION LIST

### PATENT LITERATURES

Patent Literature 1: JP 2014-518000 A
Patent Literature 2: JP 2000-82466 A

### SUMMARY

### TECHNICAL PROBLEM

The non-aqueous electrolyte secondary battery is strongly required to have improved load characteristics such as rapid chargeability and rapid dischargeability.

Therefore, an object of the present disclosure is to provide a non-aqueous electrolyte secondary battery having excellent load characteristics.

### SOLUTION TO PROBLEM

A non-aqueous electrolyte secondary battery according to an aspect of the present disclosure includes a positive electrode, a negative electrode and a non-aqueous electrolyte, and is characterized in that: the positive electrode includes a positive electrode current collector and a positive electrode mixture layer that is provided on the positive electrode current collector; the positive electrode mixture layer contains secondary particles, each of which is composed of aggregated primary particles of a positive electrode active material, and an assembly of a conductive agent and the primary particles of the positive electrode active material; and the assembly is present in gaps among the secondary particles.

### ADVANTAGEOUS EFFECTS OF INVENTION

The aspect of the present disclosure can provide a non-aqueous electrolyte secondary battery having excellent load characteristics.

### BRIEF DESCRIPTION OF DRAWINGS

FIG. 1 is a cross-sectional view of a non-aqueous electrolyte secondary battery as an example of an embodiment.
FIG. 2 is a cross-sectional view of a positive electrode as an example of the embodiment.
FIG. 3 is a cross-sectional view of a positive electrode as another example of the embodiment.
FIG. 4 is a charge/discharge curve of a non-aqueous electrolyte secondary battery of Example 1-1 when 10 cycles of rapid charge/discharge were performed.
FIG. 5 is a charge/discharge curve of a non-aqueous electrolyte secondary battery of Example 1-2 when 10 cycles of rapid charge/discharge were performed.
FIG. 6 is a charge/discharge curve of a non-aqueous electrolyte secondary battery of Comparative Example 1 when 10 cycles of rapid charge/discharge were performed.
FIG. 7 is a charge/discharge curve of a non-aqueous electrolyte secondary battery of Example 2 when 10 cycles of rapid charge/discharge were performed.
FIG. 8 is a charge/discharge curve of a non-aqueous electrolyte secondary battery of Example 3 when 10 cycles of rapid charge/discharge were performed.
FIG. 9 is a charge/discharge curve of a non-aqueous electrolyte secondary battery of Comparative Example 2 when 10 cycles of rapid charge/discharge were performed.

### DESCRIPTION OF EMBODIMENTS

Hereinafter, an example of an embodiment will be described in detail. The drawings referred to in the description of embodiments are schematically illustrated, and dimensional ratios and the like of components drawn in the drawings may be different from actual ones.

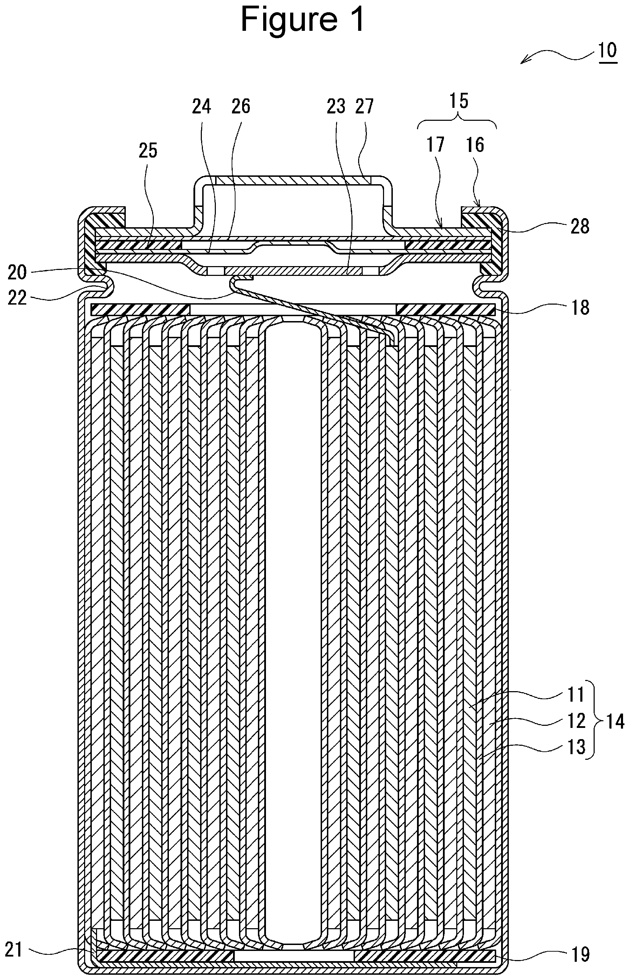

FIG. 1 is a schematic cross-sectional view of a non-aqueous electrolyte secondary battery as an example of an embodiment. A non-aqueous electrolyte secondary battery 10 shown in FIG. 1 includes a wound electrode assembly 14 formed by winding a positive electrode 11 and a negative electrode 12 with a separator 13 interposed therebetween, a non-aqueous electrolyte, insulating plates 18 and 19 respectively disposed above and below the electrode assembly 14, and a battery case 15 housing the above-described members. The battery case 15 includes a bottomed cylindrical case body 16 and a sealing assembly 17 that closes a case body 16 opening. Instead of the wound electrode assembly 14, an electrode assembly having another form, such as a stacked electrode assembly in which positive electrodes and negative electrodes are alternately stacked with separators interposed therebetween, may be applied. Examples of the battery case 15 include metal cases having a cylindrical shape, a square shape, a coin shape, a button shape, or the like, and resin cases (so-called laminated type) formed by lamination with a resin sheet.

The non-aqueous electrolyte includes, for example, a non-aqueous solvent and an electrolyte salt dissolved in the non-aqueous solvent. Examples of the non-aqueous solvent include esters, ethers, nitriles, amides, and mixtures of two or more of them. The non-aqueous solvent may contain a halogen-substituted product in which at least a part of hydrogen in a solvent described above is substituted with a halogen atom such as fluorine. Examples of the electrolyte salt include lithium salts such as LiPF₆. The electrolyte is not limited to a liquid electrolyte, and may be a solid electrolyte in which a gel polymer or the like is used.

The case body 16 is, for example, a bottomed cylindrical metal container. A gasket 28 is provided between the case body 16 and the sealing assembly 17 to ensure the sealability inside the battery. The case body 16 has a projecting portion 22 in which, for example, a part of the side part of the case body 16 protrudes inward to support the sealing assembly 17. The projecting portion 22 is preferably formed in an annular shape along the circumferential direction of the case body 16, and supports the sealing assembly 17 on its upper surface.

The sealing assembly 17 has a structure in which a filter 23, a lower vent member 24, an insulating member 25, an upper vent member 26, and a cap 27 are sequentially stacked from the electrode assembly 14 side. Each member included in the sealing assembly 17 has, for example, a disk shape or a ring shape, and the members excluding the insulating member 25 are electrically connected to each other. The lower vent member 24 and the upper vent member 26 are connected to each other at the respective center regions, and the insulating member 25 is interposed between the respective peripheral portions. When the internal pressure of the non-aqueous electrolyte secondary battery 10 increases due to heat generated by an internal short circuit or the like, for example, the lower vent member 24 deforms so as to push the upper vent member 26 up toward the cap 27 side and breaks, and thus the current pathway between the lower vent member 24 and the upper vent member 26 is cut off. When the internal pressure further increases, the upper vent member 26 breaks, and gas is discharged from an opening of the cap 27.

In the non-aqueous electrolyte secondary battery 10 illustrated in FIG. 1, a positive electrode lead 20 attached to the positive electrode 11 extends to the sealing assembly 17 side through a through hole of the insulating plate 18, and a negative electrode lead 21 attached to the negative electrode 12 extends to the bottom side of the case body 16 through the outside of the insulating plate 19. The positive electrode lead 20 is connected to the lower surface of the filter 23, which is the bottom plate of the sealing assembly 17, by welding or the like, and the cap 27, which is electrically connected to the filter 23 and is the top plate of the sealing assembly 17, serves as a positive electrode terminal. The negative electrode lead 21 is connected to the bottom inner surface of the case body 16 by welding or the like, and the case body 16 serves as a negative electrode terminal.

Hereinafter, the positive electrode 11, the negative electrode 12, and the separator 13 will be described in detail.

### [Positive Electrode]

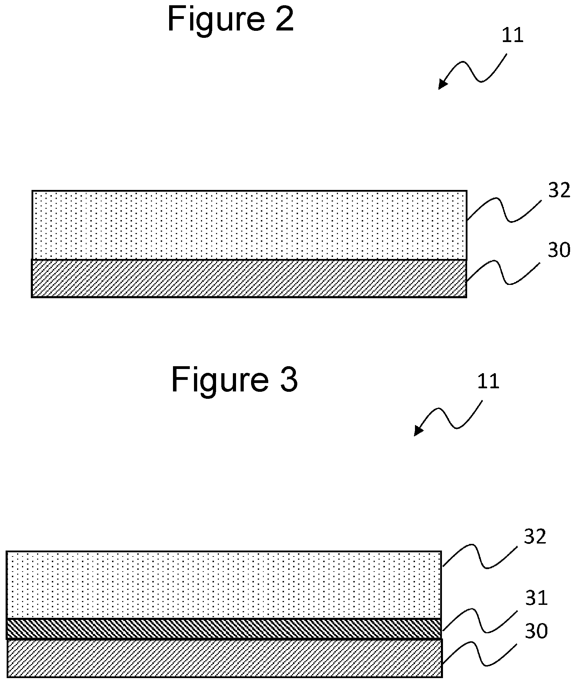

FIG. 2 is a cross-sectional view of a positive electrode as an example of the embodiment. The positive electrode 11 includes a positive electrode current collector 30 and a positive electrode mixture layer 32 provided on the positive electrode current collector 30. In the positive electrode 11, as shown in FIG. 2, the positive electrode mixture layer 32 may be provided on one surface of the positive electrode current collector 30, or the positive electrode mixture layer 32 may be provided on both surfaces of the positive electrode current collector 30.

As the positive electrode current collector 30, a foil of a metal, such as aluminum or an aluminum alloy, that is stable in a potential range of the positive electrode, a film in which the metal is disposed on its surface layer, or the like can be used. The positive electrode current collector 30 has a thickness of, for example, greater than or equal to about 10 µm and less than or equal to about 100 µm.

The positive electrode mixture layer 32 contains secondary particles, each of which is composed of aggregated primary particles of a positive electrode active material, and an assembly of a conductive agent and the primary particles of the positive electrode active material. In addition, the positive electrode mixture layer 32 suitably includes a binder in that it can bind the particles to each other to secure mechanical strength of the positive electrode mixture layer 32, can enhance binding properties between the positive electrode mixture layer 32 and the positive electrode current collector 30, and the like.

In the positive electrode mixture layer 32, the assembly of the conductive agent and the primary particles of the positive electrode active material is present in gaps among the secondary particles of the positive electrode active material. As described above, the presence of the assembly of the conductive agent and the primary particles of the positive electrode active material in the gaps among the secondary particles, for example, increases an electrode density and improves conductive paths among the secondary particles, which is considered to contribute to the improvement in load characteristics of the non-aqueous electrolyte secondary battery.

Examples of the positive electrode active material include lithium transition metal oxides containing transition metal elements such as Co, Mn, and Ni. The lithium transition metal oxide may contain, for example, Ni, Co, Mn, Al, Zr, B, Mg, Sc, Y, Ti, Fe, Cu, Zn, Cr, Pb, Sn, Na, K, Ba, Sr, Ca, W, Mo, Nb, Si, or the like. Among them, for example, Ni and Mn are preferably contained from the viewpoint of increasing the capacity of the battery. A proportion of Ni in the lithium transition metal oxide is preferably, for example, greater than or equal to 50 mol% and less than or equal to 80 mol% with respect to a total molar amount of the metal elements except lithium. A proportion of Mn in the lithium transition metal oxide is preferably, for example, greater than or equal to 20 mol% and less than or equal to 50 mol% with respect to the total molar amount of the metal elements except lithium.

An average particle diameter of the secondary particles of the positive electrode active material is preferably, for example, greater than or equal to 5 µm and less than or equal to 20 µm. An average particle diameter of the primary particles constituting the secondary particles is preferably, for example, greater than or equal to 0.1 µm and less than or equal to 2 µm. When the average particle diameter of the secondary particles and the average particle diameter of the primary particles are within the above ranges, appropriate gaps into which the assembly of the conductive agent and the primary particles of the positive electrode active material enters are formed among the secondary particles of the positive electrode active material as compared with a case where the average particle diameter of the secondary particles and the average particle diameter of the primary particles are outside the above ranges, and thus the load characteristics of the non-aqueous electrolyte secondary battery may be further improved.

The average particle diameters of the secondary particles and the primary particles of the positive electrode active material can be determined by analyzing a cross-sectional SEM image observed with a scanning electron microscope (SEM). For example, the positive electrode 11 is embedded in a resin, a cross section of the positive electrode mixture layer 32 is produced by cross section polisher (CP) processing or the like, and this cross section is photographed by SEM. Then, 30 secondary particles are randomly selected from the cross-sectional SEM image. Grain boundaries of the selected 30 secondary particles are observed, an outer shape of the secondary particle is specified, a major diameter (the longest diameter) of each of the 30 secondary particles is determined, and an average value thereof is taken as the average particle diameter of the secondary particles. Further, 30 primary particles are randomly selected from the selected secondary particles. Grain boundaries of the selected 30 primary particles are observed, an outer shape of the primary particle is specified, a major diameter (the longest diameter) of each of the 30 primary particles is determined, and an average value thereof is taken as the average particle diameter of the primary particles.

An average particle diameter of the primary particles of the positive electrode active material constituting the assembly is preferably, for example, greater than or equal to 0.1 µm and less than or equal to 2 µm. When the average particle diameter of the primary particles of the positive electrode active material constituting the assembly is within the above range, for example, the electrode density may be increased, and the load characteristics of the non-aqueous electrolyte secondary battery may be further improved. The average particle diameter is measured in the same manner as described above.

Examples of the conductive agent constituting the assembly include carbon-based particles such as carbon black (CB), acetylene black (AB), Ketjenblack, and graphite. These may be used singly, or greater than or equal to two of them may be used in combination.

Examples of the binder include fluororesins such as polytetrafluoroethylene (PTFE) and polyvinylidene fluoride (PVDF), polyacrylonitrile (PAN), polyimides, acrylic resins, polyolefins, cellulose derivatives such as carboxymethylcellulose (CMC) and its salts, and polyethylene oxide (PEO). These may be used singly, or greater than or equal to two of them may be used in combination.

An example of a method of producing the positive electrode 11 will be described. First, a positive electrode active material powder composed of secondary particles, each of which is composed of aggregated primary particles, is mixed with a conductive agent. Then, a shearing force is applied to the mixture. As a result, some of the secondary particles of the positive electrode active material are pulverized to primary particles, and the primary particles are mixed with the conductive agent to form an assembly. The formed assembly exists in gaps among the secondary particles. Examples of a shear include a mortar and pestle, a hammer mill, a pin mill, a jet mill, and a ball mill. A method may be employed in which a shearing force is applied to a positive electrode active material powder composed of secondary particles, each of which is composed of aggregated primary particles, some of the secondary particles of the positive electrode active material are pulverized to primary particles, and then a conductive agent is added and mixed.

A positive electrode mixture slurry containing the mixture formed as described above and a binder is applied onto the positive electrode current collector 30, and a coating film is dried and then rolled, whereby the positive electrode 11 in which the positive electrode mixture layer 32 is formed on the positive electrode current collector 30 can be produced.

A content of the positive electrode active material is preferably, for example, greater than or equal to 95 mass% based on a total amount of the positive electrode mixture layer 32. A content of the conductive agent is preferably, for example, greater than or equal to 1 mass% and less than or equal to 3 mass% based on the total amount of the positive electrode mixture layer 32.

FIG. 3 is a cross-sectional view of a positive electrode as another example of the embodiment. A positive electrode 11 shown in FIG. 3 includes a positive electrode current collector 30, a positive electrode mixture layer 32, and an electron conductive layer 31 provided between the positive electrode current collector 30 and the positive electrode mixture layer 32. The electron conductive layer 31 contains a conductive substance. The electron conductive layer 31 is provided between the positive electrode current collector 30 and the positive electrode mixture layer 32, whereby a conductive path between the positive electrode current collector 30 and the positive electrode mixture layer 32 is improved, and therefore load characteristics may be further improved.

Examples of the conductive substance include base material particles such as carbon-based particles of carbon black (CB), acetylene black (AB), Ketjenblack, and graphite, conductive metal oxide particles of antimony-doped tin oxide, metal particles of aluminum, copper, and gold, inorganic particles and resin particles are coated with metals such as aluminum, copper, and gold. These may be used singly, or greater than or equal to two of them may be used in combination.

The conductive substance is preferably a spherical conductive substance, and more preferably spherical carbon-based particles. As the spherical carbon-based particles, spherical graphite is preferable. Examples of the spherical graphite include mesocarbon microbeads, spherical natural graphite (for example, scaly graphite assembled in a spherical shape), and spherical (ball-shaped) carbon nanotubes.

By using a spherical conductive substance as the conductive substance, for example, by rolling at the time of producing the positive electrode, some of the secondary particles and assemblies of the positive electrode active material in the positive electrode mixture layer 32 enter the electron conductive layer 31. As described above, some of the secondary particles and assemblies of the positive electrode active material enter the electron conductive layer 31, whereby a contact area between the positive electrode mixture layer 32 and the electron conductive layer 31 is increased, and thus the conductive path between the positive electrode current collector 30 and the positive electrode mixture layer 32 is considered to be improved. In addition, when the spherical conductive substance is crushed and deformed by rolling at the time of producing the positive electrode, rearrangement of, for example, the secondary particles of the positive electrode active material occurs, so that the density of the positive electrode mixture layer may be increased. Due to these, the load characteristics of the non-aqueous electrolyte secondary battery are considered to be further improved. A thickness of the electron conductive layer 31 is preferably, for example, greater than or equal to 1 µm and less than or equal to 20 µm.

The conductive substance preferably contains amorphous carbon such as carbon black (CB), acetylene black (AB), or Ketjenblack together with spherical graphite from the viewpoint of the load characteristics of the non-aqueous electrolyte secondary battery. A content of the spherical graphite is preferably, for example, greater than or equal to 20% based on a total amount of the conductive substance.

The electron conductive layer 31 can be produced, for example, by applying a slurry containing the conductive substance and an arbitrary binder onto the positive electrode current collector and drying the slurry. The same binder as described above can be used.

The secondary particles and assembly of the positive electrode active material preferably enter the inside by greater than or equal to 5% of the thickness of the electron conductive layer 31, from a positive electrode mixture layer-side surface of the electron conductive layer 31. Alternatively, the secondary particles and assembly of the positive electrode active material preferably enter the inside by greater than or equal to 0.1 µm from the positive electrode mixture layer-side surface of the electron conductive layer 31. When the above range is satisfied, the load characteristics of the non-aqueous electrolyte secondary battery may be able to be further improved as compared with a case where the above range is not satisfied.

### [Negative Electrode]

The negative electrode 12 includes, for example, a negative electrode current collector such as a metal foil and a negative electrode mixture layer formed on the negative electrode current collector. The negative electrode current collector may be, for example, a foil of a metal, such as copper, that is stable in a potential range of the negative electrode, a film in which the metal is disposed on its surface layer. The negative electrode mixture layer contains, for example, a negative electrode active material, a binder, and the like.

The negative electrode 12 is obtained by, for example, applying a negative electrode mixture slurry containing a negative electrode active material, a binder, and the like onto a negative electrode current collector and drying the slurry to form a negative electrode mixture layer on the negative electrode current collector, and rolling the negative electrode mixture layer. The negative electrode mixture layer may be provided on both surfaces of the negative electrode current collector.

The negative electrode active material is not particularly limited as long as it is a material capable of occluding and releasing lithium ions, and examples thereof include metal lithium, lithium alloys such as a lithium-aluminum alloy, a lithium-lead alloy, a lithium-silicon alloy, and a lithium-tin alloy, carbon materials such as graphite, coke, and organic substance fired bodies, and metal oxides such as SnO₂, SnO, and TiO₂. These may be used singly or in combination of greater than or equal to two kinds thereof.

As the binder, for example, a fluororesin, PAN, a polyimide, an acrylic resin, a polyolefin, or the like can be used as in the case of the positive electrode 11, and examples thereof include styrene-butadiene rubber (SBR), CMC and a salt thereof, polyacrylic acid (PAA) and a salt thereof, and polyvinyl alcohol (PVA).

### [Separator]

As the separator 13, for example, a porous sheet having an ion permeation property and an insulation property is used. Specific examples of the porous sheet include fine porous thin films, woven fabrics, and nonwoven fabrics. As a material for the separator, olefin-based resins such as polyethylene and polypropylene, cellulose, and the like are suitable. The separator 13 may be a laminate including a cellulose fiber layer and a thermoplastic resin fiber layer such as an olefin-based resin. The separator may be a multilayer separator including a polyethylene layer and a polypropylene layer, and a separator may be used that has a surface to which a material such as an aramid-based resin or a ceramic is applied.

### EXAMPLES

Hereinafter, the present disclosure will be further described with reference to Examples. However, the present disclosure is not limited to the following Examples.

### <Example 1-1>

### [Production of Positive Electrode]

In a mortar, 97 parts by mass of a positive electrode active material represented by LiNi_{0.8}Mn_{0.2}O₂ and 2 parts by mass of acetylene black (AB) as a conductive agent were shear-mixed using a pestle. After mixing of 99 parts by mass of the resulting mixture and 1 part by mass of polyvinylidene fluoride (PVDF) as a binder, an appropriate amount of N-methyl-2-pyrrolidone (NMP) was then added to prepare a positive electrode mixture slurry. Next, the positive electrode mixture slurry was applied to one surface of a positive electrode current collector made of an aluminum foil, and a coating film was dried and then rolled using a rolling roller. In this way, a positive electrode in which a positive electrode mixture layer was formed on both surfaces of the positive electrode current collector was produced.

From the obtained positive electrode, a cross section of the positive electrode mixture layer was produced by the above-described cross section polisher (CP) processing, and observed by SEM. As a result, it was confirmed that an assembly of the conductive agent and primary particles of the positive electrode active material was present in gaps among secondary particles, each of which was composed of aggregated primary particles of the positive electrode active material.

### [Production of Negative Electrode]

A negative electrode was produced by pressure-bonding a lithium foil having a thickness of 300 µm to one surface of a copper foil.

### [Preparation of Non-Aqueous Electrolyte]

Ethylene carbonate (EC), dimethyl carbonate (DMC), and ethyl methyl carbonate (EMC) were mixed at a volume ratio of 20:75:5. LiPF₆ was dissolved in the mixed solvent so as to attain a concentration of 1.3 mol/L to prepare a non-aqueous electrolyte.

### [Production of Non-Aqueous Electrolyte Secondary Battery]

The positive electrode and the negative electrode were cut into ϕ 12.5 mm and ϕ 15.0 mm, respectively. In a stainless steel cell manufactured by EC Frontier Co., Ltd., both of them were stacked with a separator interposed therebetween, and an electrolytic solution was dropped and sealed. This was used as a non-aqueous electrolyte secondary battery of Example 1-1.

### <Example 1-2>

A non-aqueous electrolyte secondary battery was produced in the same manner as in Example 1-1 except that 98 parts by mass of a positive electrode active material represented by LiNi_{0.8}Mn_{0.2}O₂ and 1 part by mass of acetylene black (AB) as a conductive agent were shear-mixed in a mortar using a pestle in production of the positive electrode. A cross section of the positive electrode mixture layer was observed by SEM in the same manner as in Example 1-1. As a result, it was confirmed that an assembly of the conductive agent and primary particles of the positive electrode active material was present in gaps among secondary particles, each of which was composed of aggregated primary particles of the positive electrode active material.

### <Comparative Example 1>

A non-aqueous electrolyte secondary battery was produced in the same manner as in Example 1-1 except that 97 parts by mass of a positive electrode active material represented by LiNi_{0.8}Mn_{0.2}O₂ and 2 parts by mass of acetylene black (AB) as a conductive agent were put in a polypropylene bottle and rotationally stirred and mixed with a mix rotor in production of the positive electrode. A cross section of the positive electrode mixture layer was observed by SEM in the same manner as in Example 1-1. As a result, it was confirmed that only the conductive agent was present in gaps among secondary particles, each of which was composed of aggregated primary particles of the positive electrode active material, and that an assembly of the conductive agent and the primary particles of the positive electrode active material was not present.

### [Evaluation 1 of Load Characteristics]

Rapid charge/discharge was performed as follows, and the load characteristics of Examples and Comparative Examples were evaluated. The non-aqueous electrolyte secondary batteries of Examples 1-1 and 1-2 and Comparative Example 1 were subjected to charge at a constant current of 0.7 C under a temperature environment of 25°C until the battery voltage reached 4.5 V, and subsequently subjected to constant voltage charge until the current decreased to 0.07 C. Then, the batteries were discharged at a constant current of 0.15 C until the battery voltage reached 2.5 V. Ten (10) cycles of rapid charge/discharge were performed.

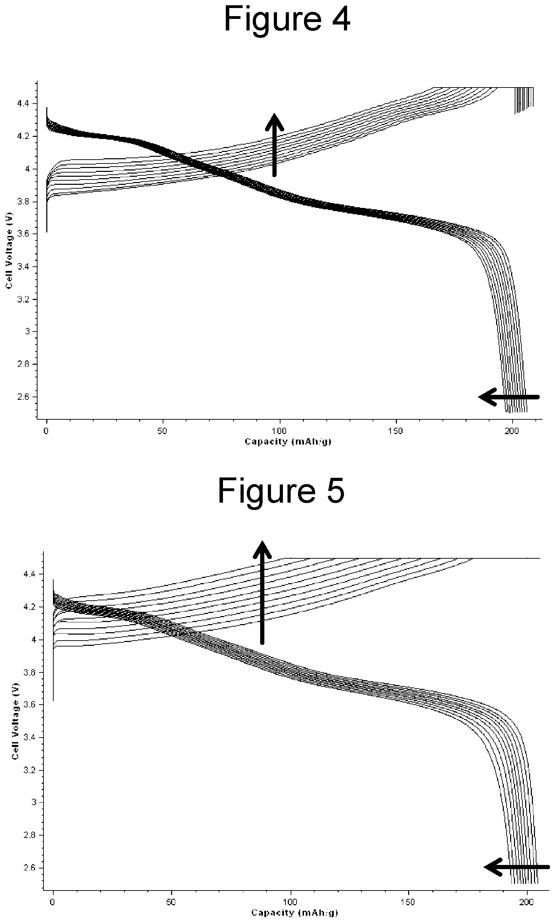

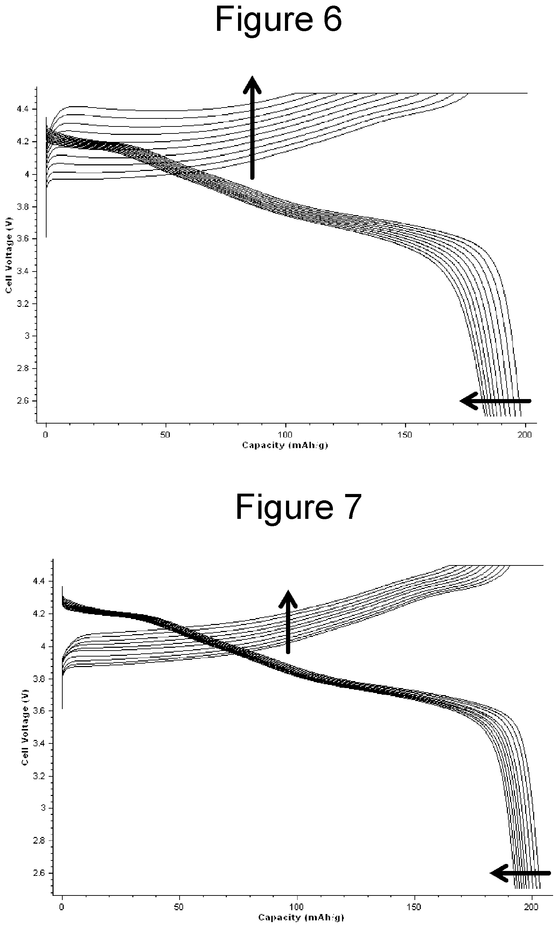

FIG. 4 is a charge/discharge curve of the non-aqueous electrolyte secondary battery of Example 1-1 when 10 cycles of rapid charge/discharge were performed. FIG. 5 is a charge/discharge curve of the non-aqueous electrolyte secondary battery of Example 1-2 when 10 cycles of rapid charge/discharge were performed. FIG. 6 is a charge/discharge curve of the non-aqueous electrolyte secondary battery of Comparative Example 1 when 10 cycles of rapid charge/discharge were performed. In FIGS. 4 to 6, the vertical axis represents the battery voltage, and the horizontal axis represents the discharge capacity of the non-aqueous electrolyte secondary battery.

As can be seen from FIGS. 4 to 6, in the non-aqueous electrolyte secondary batteries of Examples 1-1 and 1-2, as compared with the non-aqueous electrolyte secondary battery of Comparative Example 1, an increase in battery voltage due to repetition of rapid charge was suppressed, and a decrease in discharge capacity was also suppressed. From this result, it can be said that a non-aqueous electrolyte secondary battery having excellent load characteristics is obtained by using a positive electrode in which an assembly of a conductive agent and primary particles of a positive electrode active material is present in gaps among secondary particles, each of which is composed of aggregated primary particles of the positive electrode active material.

### <Example 2>

A positive electrode was produced in the same manner as in Example 1-2 except that an electron conductive layer was formed between the positive electrode current collector and the positive electrode mixture layer. The electron conductive layer was produced as follows. Mixed were 98 parts by mass of mesocarbon microbeads (MCMBs) as a conductive substance and 2 parts by mass of polytetrafluoroethylene (PTFE) as a binder, and the mixture was rolled into a sheet having a thickness of 21 µm. Then, the sheet was bonded to one surface of a positive electrode current collector made of an aluminum foil to form an electron conductive layer. A cross section of the positive electrode mixture layer was observed by SEM in the same manner as in Example 1-1. As a result, an assembly of the conductive agent and primary particles of the positive electrode active material was present in gaps among secondary particles, each of which was composed of aggregated primary particles of the positive electrode active material. In addition, some of the secondary particles and some of the assemblies of the positive electrode active material entered the electron conductive layer side.

A non-aqueous electrolyte secondary battery was produced in the same manner as in Example 1-1 except that the positive electrode was used, and evaluation 1 of the load characteristics were performed.

FIG. 7 is a charge/discharge curve of a non-aqueous electrolyte secondary battery of Example 2 when 10 cycles of rapid charge/discharge were performed. Here, when Example 2 and Example 1-2 which were identical in content of the conductive agent constituting the assembly were compared with each other, Example 2, using the positive electrode in which the electron conductive layer was formed between the positive electrode current collector and the positive electrode mixture layer, showed more suppressed increase in battery voltage due to repetition of rapid charge and also more suppressed decrease in discharge capacity. From this result, it can be said that a non-aqueous electrolyte secondary battery having excellent load characteristics is obtained by using a positive electrode in which an assembly of a conductive agent and primary particles of a positive electrode active material is present in gaps among secondary particles, each of which is composed of aggregated primary particles of the positive electrode active material, in a positive electrode mixture layer, and an electron conductive layer is formed between a positive electrode current collector and the positive electrode mixture layer.

### <Example 3>

A positive electrode was produced in the same manner as in Example 2 except that a positive electrode active material represented by LiNi_{0.5}Mn_{0.5}O₂ was used. A cross section of the positive electrode mixture layer was observed by SEM in the same manner as in Example 1-1. As a result, an assembly of the conductive agent and primary particles of the positive electrode active material was present in gaps among secondary particles, each of which was composed of aggregated primary particles of the positive electrode active material. In addition, some of the secondary particles and some of the assemblies of the positive electrode active material entered the electron conductive layer side.

A non-aqueous electrolyte secondary battery was produced in the same manner as in Example 1-1 except that the positive electrode was used and that the charge voltage was 4.7 V, and evaluation 1 of the load characteristics were performed.

### <Comparative Example 2>

A non-aqueous electrolyte secondary battery was produced in the same manner as in Comparative Example 1 except that 98 parts by mass of a positive electrode active material represented by LiNi_{0.5}Mn_{0.5}O₂ and 1 part by mass of acetylene black (AB) as a conductive agent were put in a polypropylene bottle and rotationally stirred and mixed with a mix rotor in production of the positive electrode. A cross section of the positive electrode mixture layer was observed by SEM in the same manner as in Example 1-1. As a result, it was confirmed that only the conductive agent was present in gaps among secondary particles, each of which was composed of aggregated primary particles of the positive electrode active material, and that an assembly of the conductive agent and the primary particles of the positive electrode active material was not present.

A non-aqueous electrolyte secondary battery was produced in the same manner as in Example 1-1 except that the positive electrode was used, and evaluation 1 of the load characteristics were performed.

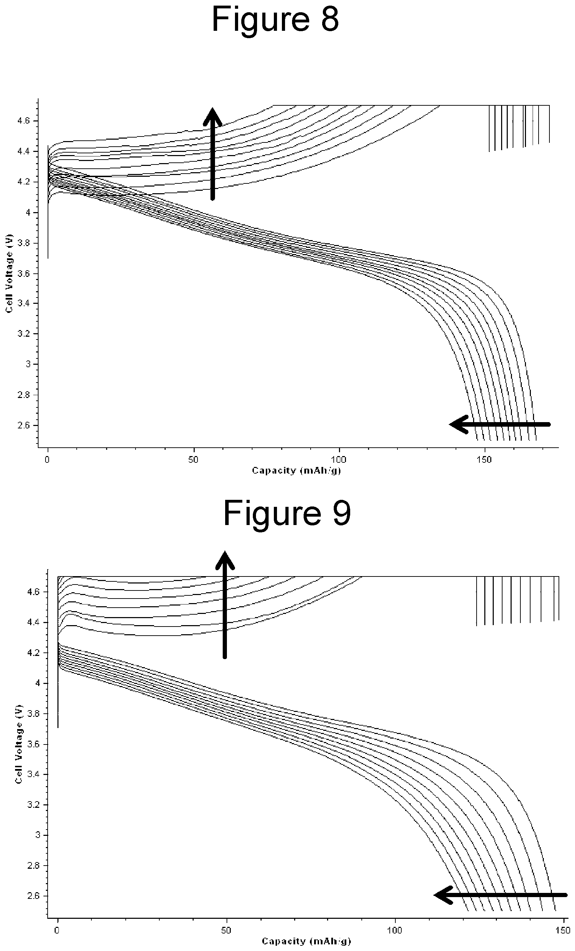

FIG. 8 is a charge/discharge curve of the non-aqueous electrolyte secondary battery of Example 3 when 10 cycles of rapid charge/discharge were performed. FIG. 9 is a charge/discharge curve of the non-aqueous electrolyte secondary battery of Comparative Example 2 when 10 cycles of rapid charge/discharge were performed.

As can be seen from FIGS. 8 and 9, in the non-aqueous electrolyte secondary battery of Example 3, as compared with the non-aqueous electrolyte secondary battery of Comparative Example 2, an increase in battery voltage due to repetition of rapid charge was suppressed, and a decrease in discharge capacity was also suppressed. That is, similarly to the results so far, it can be said that a non-aqueous electrolyte secondary battery having excellent load characteristics is obtained by using a positive electrode in which an assembly of a conductive agent and primary particles of a positive electrode active material is present in gaps among secondary particles, each of which is composed of aggregated primary particles of the positive electrode active material.

### <Example 4-1>

A positive electrode was produced in the same manner as in Example 1-2 except that an electron conductive layer was formed between the positive electrode current collector and the positive electrode mixture layer. The electron conductive layer was produced as follows. Mixed were 98 parts by mass of mesocarbon microbeads (MCMBs) as a conductive substance and 2 parts by mass of polytetrafluoroethylene (PTFE) as a binder, and the mixture was rolled into a sheet having a thickness of 21 µm. Then, the sheet was bonded to one surface of a positive electrode current collector made of an aluminum foil to form an electron conductive layer.

### <Example 4-2>

A positive electrode was produced in the same manner as in Example 4-1 except that, in formation of the electron conductive layer, 98 parts by mass of a mixture obtained by mixing mesocarbon microbeads (MCMBs) as a conductive substance and acetylene black (AB) at a mass ratio of 80:20 and 2 parts by mass of polytetrafluoroethylene as a binder were mixed to produce a sheet.

### <Example 4-3>

A positive electrode was produced in the same manner as in Example 4-1 except that, in formation of the electron conductive layer, 98 parts by mass of a mixture obtained by mixing mesocarbon microbeads (MCMBs) as a conductive substance and acetylene black (AB) at a mass ratio of 60:40 and 2 parts by mass of polytetrafluoroethylene as a binder were mixed to produce a sheet.

### <Example 4-4>

A positive electrode was produced in the same manner as in Example 4-1 except that, in formation of the electron conductive layer, 98 parts by mass of a mixture obtained by mixing mesocarbon microbeads (MCMBs) as a conductive substance and acetylene black (AB) at a mass ratio of 40:60 and 2 parts by mass of polytetrafluoroethylene as a binder were mixed to produce a sheet.

### <Example 4-5>

A positive electrode was produced in the same manner as in Example 4-1 except that, in formation of the electron conductive layer, 98 parts by mass of a mixture obtained by mixing mesocarbon microbeads (MCMBs) as a conductive substance and acetylene black (AB) at a mass ratio of 20:80 and 2 parts by mass of polytetrafluoroethylene as a binder were mixed to produce a sheet.

### <Example 4-6>

A positive electrode was produced in the same manner as in Example 4-1 except that, in formation of the electron conductive layer, 98 parts by mass of a mixture obtained by mixing mesocarbon microbeads (MCMBs) as a conductive substance and acetylene black (AB) at a mass ratio of 10:90 and 2 parts by mass of polytetrafluoroethylene as a binder were mixed to produce a sheet.

Cross sections of the positive electrode mixture layers of Examples 4-1 to 4-6 were observed by SEM. As a result, an assembly of the conductive agent and primary particles of the positive electrode active material was present in gaps among secondary particles, each of which was composed of aggregated primary particles of the positive electrode active material. In addition, some of the secondary particles and some of the assemblies of the positive electrode active material entered the electron conductive layer side.

In Examples 4-1 to 4-6, non-aqueous electrolyte secondary batteries were produced in the same manner as in Example 1-1 except that the positive electrode was used.

### [Evaluation 2 of Load Characteristics]

The non-aqueous electrolyte secondary batteries of Examples 4-1 to 4-6 were charged at a constant current of 0.1 C under a temperature environment of 25°C until the battery voltage reached 4.5 V, and then discharged at a constant current of 0.1 C until the battery voltage reached 2.5 V. The discharge capacity at this time was defined as a 0.1 C discharge capacity. Next, the non-aqueous electrolyte secondary batteries of Examples 4-1 to 4-6 were charged at a constant current of 0.1 C under a temperature environment of 25°C until the battery voltage reached 4.5 V, and then discharged at a constant current of 0.7 C until the battery voltage reached 2.5 V. The discharge capacity at this time was defined as a 0.7 C discharge capacity. Then, the capacity retention rate was calculated by the following equation, and the results are summarized in Table 1. It can be said that the higher the value of the capacity retention rate, the more excellent the load characteristic. Capacity retention rate (%) = (0.7 C discharge capacity/0.1 C discharge capacity) × 100

**[Table 1]**

| | Mass ratio of electron conductive layer | | Capacity retention rate |
|---|---|---|---|
| | MCMB | AB | (%) |
| Example 4-1 | 100 | 0 | 99 |
| Example 4-2 | 80 | 20 | 99 |
| Example 4-3 | 60 | 40 | 98 |
| Example 4-4 | 40 | 60 | 96 |
| Example 4-5 | 20 | 80 | 93 |
| Example 4-6 | 10 | 90 | 85 |

In the non-aqueous electrolyte secondary batteries of Examples 4-1 to 4-5, the capacity retention rate was greater than or equal to 90%. From this result, it can be said that the electron conductive layer provided between the positive electrode mixture layer and the positive electrode current collector preferably contains mesocarbon microbeads (MCMBs) which are spherical graphite in an amount of greater than or equal to 20 mass% with respect to the total mass of the conductive substance.

### REFERENCE SIGNS LIST

- 10: Non-aqueous electrolyte secondary battery
- 11: Positive electrode
- 12: Negative electrode
- 13: Separator
- 14: Electrode assembly
- 15: Battery case
- 16: Case body
- 17: Sealing assembly
- 18, 19: Insulating plate
- 20: Positive electrode lead
- 21: Negative electrode lead
- 22: Projecting portion
- 23: Filter
- 24: Lower vent member
- 25: Insulating member
- 26: Upper vent member
- 27: Cap
- 28: Gasket
- 30: Positive electrode current collector
- 31: Electron conductive layer
- 32: Positive electrode mixture layer

## Claims

1. A non-aqueous electrolyte secondary battery comprising: a positive electrode; a negative electrode; and a non-aqueous electrolyte, wherein
the positive electrode comprises a positive electrode current collector and a positive electrode mixture layer that is provided on the positive electrode current collector,
the positive electrode mixture layer comprises secondary particles, each of which is composed of aggregated primary particles of a positive electrode active material, and an assembly of a conductive agent and the primary particles of the positive electrode active material, and the assembly is present in gaps among the secondary particles.

2. The non-aqueous electrolyte secondary battery according to claim 1, wherein the positive electrode active material comprises Ni and Mn.

3. The non-aqueous electrolyte secondary battery according to claim 1 or 2, wherein an electron conductive layer comprising a conductive substance is provided between the positive electrode mixture layer and the positive electrode current collector.

4. The non-aqueous electrolyte secondary battery according to claim 3, wherein the conductive substance comprises spherical graphite.

5. The non-aqueous electrolyte secondary battery according to claim 4, wherein the conductive substance comprises amorphous carbon.
